# EUROPEAN PATENT APPLICATION

(11) **EP 4 762 910 A1**
(43) Date of publication of application: **24.06.2026**
(21) Application number: 24221174.6
(22) Date of filing: 18.12.2024
(51) Int. Cl.: A01D 41/127, A01D 43/08

(54) **FORAGE HARVESTER CONTROL**

(71) Applicant: CNH Industrial Belgium N.V., 8210 Zedelgem (BE)
(72) Inventor: Born, Mathias, 8210 Zedelgem (BE); Leblicq, Tom, 8210 Zedelgem (BE); Abbinante, Massimiliano, 8210 Zedelgem (BE); VERMANDER, Jeroen, J.M., 8210 Zedelgem (BE)
(74) Representative: CNH Industrial IP Department

(57) **Abstract**

A forage harvester for harvesting crop, the forage harvester comprising: a crop processor for processing the crop to form crop silage; a kernel quality sensor for monitoring the crop silage; and a controller configured to: receive one or more objective conditions including a kernel quality threshold for the crop silage; process the one or more objective conditions with a feedforward model to determine a plurality of initial operational parameter values for the forage harvester; set a plurality of operational parameters of the forage harvester using the initial operational parameter values; receive a kernel quality score from the kernel quality sensor; and update the plurality of operational parameters until the kernel quality score satisfies the kernel quality threshold.

## Description

### Field

The present disclosure relates to a forage harvester and, in particular, the control of a forage harvester.

### Summary

According to a first aspect of the present disclosure there is provided a forage harvester for harvesting crop, the forage harvester comprising:
a crop processor for processing the crop to form crop silage;
a kernel quality sensor for monitoring the crop silage; and
a controller configured to:
   receive one or more objective conditions including a kernel quality threshold for the crop silage;
   process the one or more objective conditions with a feedforward model to determine a plurality of initial operational parameter values for the forage harvester;
   set a plurality of operational parameters of the forage harvester using the initial operational parameter values;
   receive a kernel quality score from the kernel quality sensor; and
   update the plurality of operational parameters until the kernel quality score satisfies the kernel quality threshold.

The controller may be configured to adjust the plurality of operational parameters until the kernel quality score satisfies the kernel quality threshold.

The controller may be configured to:
receive a crop moisture value from a moisture sensor; and
adjust one or more of: the kernel quality score, the kernel quality threshold or the plurality of operational parameters based on the crop moisture value.

The plurality of operational parameters may include:
engine speed; and / or
a separation of the crop processor rollers.

The plurality of operational parameters comprises one or more of:
a speed ratio of the crop processor rollers;
a driving speed; and
a cut length.

The controller may be configured to update the feedforward model based on the kernel quality score and the adjusted operational parameters.

The controller may be configured to:
receive one or more crop condition parameters; and
update the feedforward model based on the crop condition parameters.

The controller may be configured to process the one or more objective conditions and one or more input parameters with the feedforward model to determine the plurality of initial operational parameter values.

The one or more input parameters may comprise one or more of:
a crop condition parameter;
a cutter drum type;
a number of knives;
a crop processor roll surface type;
a speed of the crop processor rolls;
a speed ratio between the crop processor rolls;
an engine speed, an accelerator speed or a cutter speed;
a speed ratio between an engine speed and an accelerator speed;
a speed ratio between an engine speed and a cutter speed; and
a speed ratio between an engine speed and a speed of the crop processor rolls

The crop condition parameter may comprise a moisture value. The moisture value may be measured by a moisture sensor.

The controller may be configured to:
output one or more machine configuration recommendations if the feedforward model does not identify a plurality of operational parameters to satisfy the one or more objective conditions.

The one or more machine configuration recommendations may comprise:
a recommendation to use a different type of cutter drum
a recommendation to use a different type of crop processor roll surface; or
a recommendation to change any of the input parameters that cannot be automatically set by the controller.

The feedforward model may comprise a multi-dimensional model, a multi-dimensional regression model or a machine learning model.

The feedforward model may comprise a relation mapping between a plurality of independent variables, including the plurality of operational parameters, and one or more objective parameters corresponding to the one or more objective conditions.

The one or more objective conditions may include one or more of:
a target fuel consumption; and
a target capacity.

The controller may be configured to determine the plurality of initial operational parameter values to satisfy the one or more objective conditions.

The controller may be configured to determine an objective function based on the one or more objective conditions.

The controller may be configured to update operational parameter values until a value of the objective function satisfies a termination condition to obtain the plurality of initial operational parameter values.

The controller may be configured to define the objective function as comprising:
a mandatory quality objective corresponding to an estimated kernel quality score exceeding the kernel quality threshold; and
one or both of:
   a desirable fuel consumption objective corresponding to minimising an error between an estimated fuel consumption and the target fuel consumption; and
   a desirable capacity objective corresponding to minimising an error between an estimated capacity and the target capacity.

The controller may be configured to:
receive a fuel consumption weighting;
receive a capacity weighting; and
determine the target fuel consumption and the target capacity based on the relative values of the fuel consumption weighting and the capacity weighting.

The controller may be configured to receive a kernel quality weighting and determine the kernel quality threshold, the target fuel consumption and the target capacity based on the relative values of the kernel quality weighting, the fuel consumption weighting and the capacity weighting.

The forage harvester may comprise a user interface configured to display an objective condition balancing interface. The controller may be configured to:
receive a user selection from the objective condition balancing interface;
determine the kernel quality threshold based on the user selection; and
determine one or both of: the target fuel consumption; and the target capacity, based on the user selection.

According to a second aspect of the present disclosure there is provided a method for controlling a forage harvester comprising:
receiving one or more objective conditions including a kernel quality threshold for the crop silage;
processing the one or more objective conditions with a feedforward model to determine a plurality of initial operational parameter values for the forage harvester;
setting a plurality of operational parameters of the forage harvester using the initial operational parameter values;
receiving a kernel quality score from the kernel quality sensor; and
updating the plurality of operational parameters until the kernel quality score satisfies the kernel quality threshold.

According to a further aspect of the present disclosure there is provided a forage harvester for harvesting crop, the forage harvester comprising:
a crop processor for processing the crop to form crop silage;
a kernel quality sensor for monitoring the crop silage; and
a controller configured to:
   receive one or more objective parameters including a kernel quality threshold for the crop silage;
   receive a kernel quality score for the crop silage from a kernel quality sensor; and
   control a plurality of operational parameters of the forage harvester to process the crop such that the kernel quality score satisfies the kernel quality threshold.

The controller may be configured to: receive a crop moisture value from a moisture sensor; and adjust one or more of: the kernel quality score, the kernel quality threshold or the plurality of operational parameters based on the crop moisture value.

The plurality of operational parameters include: engine speed; and a separation of crop processor rollers.

The kernel quality threshold may comprise a lower quality limit. The controller may control the plurality of operational parameters to reduce the kernel quality score towards the lower quality limit and improve a fuel efficiency and/or a capacity of the crop processing.

The one or more objective parameters include one or more of: a target fuel consumption; and a target capacity.

The controller may be configured to:
receive a fuel consumption weighting;
receive a capacity weighting; and
determine the target fuel consumption and the target capacity based on the relative values of the fuel consumption weighting and the capacity weighting.

The controller may be configured to receive a kernel quality weighting and determine the kernel quality threshold, the target fuel consumption and the target capacity based on the relative values of the kernel quality weighting, the fuel consumption weighting and the capacity weighting.

The forage harvester may comprise a user interface configured to display an objective condition balancing interface and the controller is configured to:
receive a user selection from the objective condition balancing interface;
determine the kernel quality threshold based on the user selection; and
determine one or both of: the target fuel consumption; and the target capacity, based on the user selection.

There may be provided a computer program, which when run on a computer, causes the computer to configure any apparatus, including a circuit, controller, converter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download. There may be provided one or more non-transitory computer-readable storage media storing computer-executable instructions that, when executed by a computing system, causes the computing system to perform any method disclosed herein.

### Brief Description of the Drawings

One or more embodiments will now be described by way of example only with reference to the accompanying drawings in which:
Figure 1 shows an agricultural harvester in the form of a forage harvester;
Figure 2 highlights a crop processing path of the forage harvester of Figure 1;
Figure 3 shows a schematic diagram with some functional elements of the forage harvester of Figures 1 and 2;
Figure 4A illustrates an example control schematic for a forage harvester according to an embodiment of the present disclosure;
Figure 4B illustrates a second example control schematic for a forage harvester according to an embodiment of the present disclosure;
Figure 5A illustrates the performance of a multi-dimension regression model estimating the kernel quality score for different sets of operational parameters and input parameters;
Figure 5B illustrates the error from the plot of Figure 5A;
Figure 5C illustrates the performance of a multi-dimension regression model estimating the power consumption for different sets of operational parameters and input parameters;
Figure 5D illustrates the error from the plot of Figure 5C;
Figure 6A illustrates a user interface for setting the kernel quality threshold according to an embodiment of the present disclosure;
Figure 6B illustrates a second user interface for setting the kernel quality threshold according to an embodiment of the present disclosure;
Figure 7A illustrates example user interfaces for displaying the kernel quality score according to an embodiment of the present disclosure;
Figure 7B illustrates further example user interfaces for displaying the kernel quality score according to an embodiment of the present disclosure;
Figure 8 illustrates a user interface including an objective function balancing interface according to an embodiment of the present disclosure; and
Figure 9 illustrates a method according to an embodiment of the present disclosure.

### Detailed Description

Modern agricultural harvesters have a lot of operational parameters (also referred to herein as machine parameters) that can be set while harvesting. In a forage harvester, for example, the user may change a forward drive speed, header height, feed roll speed, or crop processor configuration while continuing to harvest crop. By adjusting the harvester configuration, the user may increase the crop volume that is taken from the land, adjust a length of cut of the chopped crop that is thrown into the trailer following the harvester, or control the crushing of grain kernels and other plant material by the crop processor.

With these adjustments, the user tries to achieve various goals such as increasing the amount of crop that is harvested, ensuring that the quality of the harvested crop is optimal, and limiting the use of fuel for driving and operating the harvester. In modern forage harvesters, sensors may be available to inform the user about fuel consumption, harvested volumes, and length of cut, moisture content, ash content, fibre content, protein content, and sugar content of the harvested crop. Based on this information, the user makes his decisions about how to adapt the operational parameters of the harvester to optimise his harvesting results. Often, the various harvesting goals the user may have cannot be achieved simultaneously. Taking in more crop and cutting it into smaller pieces requires more fuel. Raising the header to improve the nutritional value of the harvested crop leads to a lower total volume of harvester material. A lot of experience and guess work is therefore needed to optimally control a forage harvester.

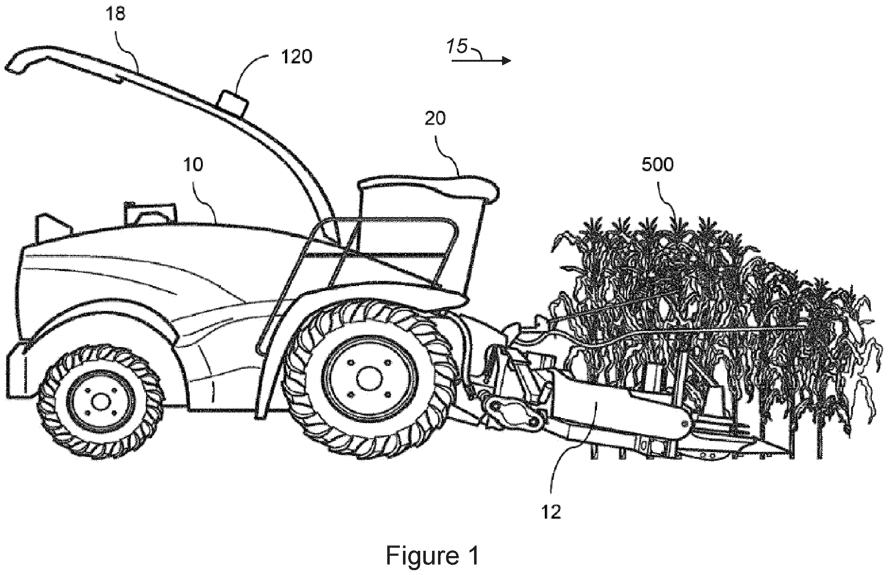

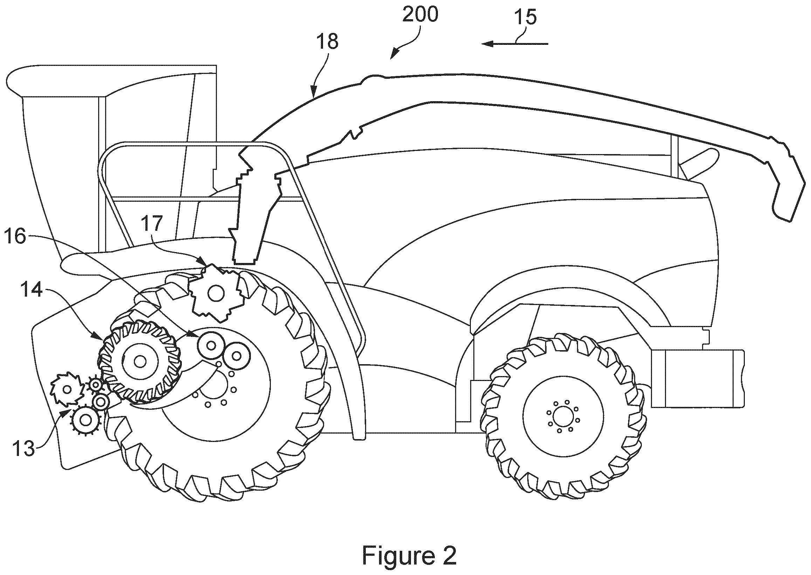

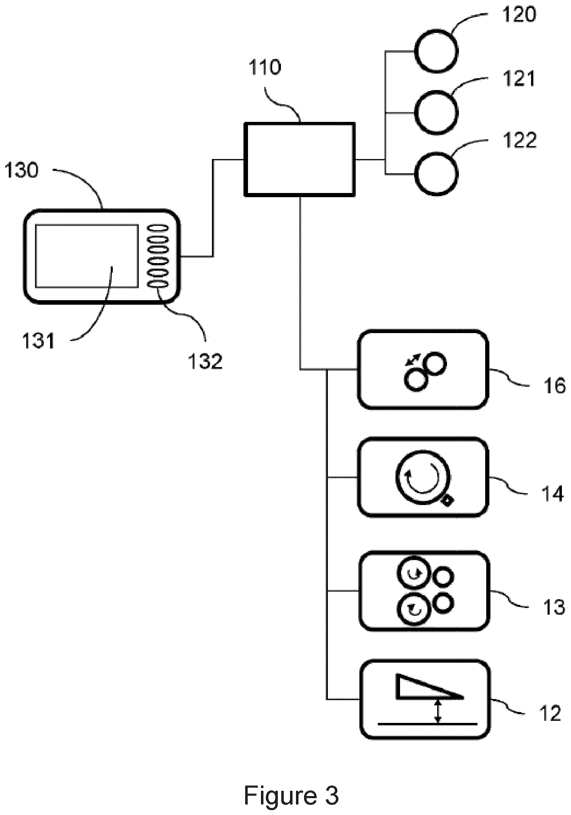

Figures 1 to 3 illustrate a forage harvester according to one or more embodiments of the present disclosure. Figure 1 shows an agricultural harvester in the form of a forage harvester 10; Figure 2 highlights a crop processing path 200 of the forage harvester 10; and Figure 3 shows a schematic diagram with some functional elements of the forage harvester 10.

The forage harvester 10 is configured to harvest crops 500 such as corn and grass that can be used in the production of animal feed. To this end, a header 12 is attached to a front end of the forage harvester 10. The header 11 is adjustable in height and configured to cut and gather the crop 500 from a field as the forage harvester 10 moves in a forward direction indicated by arrow 15. A set of feed rolls 13 (or rollers) is arranged to draw the cut crop from the header 12 into a crop flow channel, where the crop is processed. The processed crop (or crop silage) is then guided into a spout 18, accelerated by a blower 17, and discharged into a trailer that may drive alongside or behind the forage harvester 10.

The processing of the harvested crop typically involves chopping the crop 500 into smaller pieces using a cutter drum 14 and a step of crushing the cut crop using a crop processor 16. The cutter drum 14 cuts the crop 500 between a rotating drum and a counter knife. The length of cut depends on the relative speed of the feed rolls 13 and the cutter drum 14. While the rotational speed of the cutter drum 14 is often directly linked to the engine speed, length of cut adjustments are typically realised by controlling the rotational speed of the feed rolls 13. The faster the feed rolls 13, the longer the crop pieces.

The crop processor 16, also called a kernel processor 16, is positioned downstream of the cutter drum 14 and made up of two toothed crop processor rolls (also referred to as crop processor rollers) with a gap /separation therebetween. The main function of the crop processor 16 is to crush corn and other cereal grains that easily pass the cutter drum 14 to release the nutritious content of the kernels. Similarly, the crop processor 16 may be used to release more of the nutritious content of non-grain material. A gap (or separation) between the two toothed crop processor rolls can be adjusted to control the operation of the crop processor 16.

Adjusting operational parameters of the forage harvester 10, such as by changing the drive speed of the forage harvester 10, the height of the header 12, the rotational speed of the feed rolls 13, or the size of the gap between the toothed crop processor rolls of the crop processor 16 may affect the volume and content of the harvested crop as it is gathered in the trailer. Additionally, such adjustments to the operational parameters influence the fuel consumption of the forage harvester 10. For example, lowering the header 12 will cause more crop 500 to be taken from the field and more fuel to be consumed for the processing of that crop 500. Also lowering the speed of the feed rolls 13 or reducing the gap between the crop processor rolls 16 leads to a higher fuel consumption.

The operation of the forage harvester 10 and its various functional parts may be controlled by one or more electronic controllers 110. A user interface 130, which in this example is a display unit, may be operatively coupled to the controller 110 to show relevant operational information on a screen 131. The user interface 130 may be positioned in a user cab 20. The user interface 130 may further provide a graphical user interface, enabling the user to control what information is shown and to adjust one or more operational parameters of the forage harvester 10 when needed. The user interface may be controlled using hardware buttons 132 provided on the display unit or using on-screen buttons if the screen 131 is equipped with touch screen functionality.

Control of the harvester operation may at least partly be automatic, based on one or more sensors 120, 121, 122 that are provided for obtaining real-time information about the forage harvester 10 and/or the crop moving through it. The sensors may include a kernel quality sensor 120. In some examples, closed-loop automatic control of the operational parameters may be achieved using the kernel quality sensor 120. However, values from the kernel quality sensor 120 can be slow to update following adjustment of operational parameters and the forage harvester 10 may have harvested a significant amount of crop before a desired quality is achieved. The one or more sensors may comprise one or more of: a moisture sensor 121; an engine RPM sensor 122; a length of cut sensor; a harvested volume sensor; or any other sensor for measuring an operational parameter.

One or more embodiments of the present disclosure may provide a forage harvester 10 with improved control of operational parameters. The improved control makes use of closed loop control, based on a kernel quality score from a kernel quality sensor, that can control the operational parameters to satisfy a kernel quality threshold. In some examples, an initial set of operational parameter values are determined by processing the kernel quality threshold with a feedforward model. Such an approach can advantageously provide a more responsive forage harvester 10 that can quickly set initial operational parameters based on user requirements and/or crop conditions. The closed loop control can then refine the initial values of the operational parameters. Further improved control may be provided by balancing the objective conditions of crop quality, fuel consumption and driving speed (or capacity of harvested material per unit time). Further improved control may be provided through an improved user interface enabling the user to prioritise their requirements.

According to an embodiment of the present disclosure, the controller 110 is configured to: receive a kernel quality score for the crop silage from a kernel quality sensor 120; and control a plurality of operational parameters of the forage harvester 10 to process the crop 500 such that the kernel quality score satisfies a kernel quality threshold.

The kernel quality score may also be called a kernel processing score (KPS) or corn silage processing score (CSPS).

The kernel quality score may provide a measure for the quality of the cut crop. In some examples, the kernel quality sensor 120 may comprise a camera and/or NIR (Near InfraRed) sensor provided at the spout 18 to monitor the crop moving through the spout. The kernel quality sensor 120 may capture an image, detect kernels in the image and determine a size of the kernels in the image. The kernel quality score may be determined as a fraction of small kernels (below a threshold kernel size) relative to a total kernel mass (e.g. number of kernels). An example kernel quality sensor is described in co-pending application EP24170542 which is hereby incorporated by reference in its entirety. In that example, an agricultural machine has a conveyor for moving harvested crop material and an optical sensor that captures image data of the crop material. An image processing system analyzes the image data to calculate the KPS. Key steps include: Using the optical sensor to capture data of kernel particles within the crop material; generating a histogram based on the size, surface area, and quantity of identified kernel particles; applying a mathematical function to the histogram to enhance its informative value; and calculating the KPS from the analyzed data, providing a measure of kernel processing quality directly onboard the machine.

Other crop attributes may be used in determining the kernel quality score. For example, the kernel quality score may be determined based on one or more of: a moisture level, a length of cut, an ash content, a fibre content, a sugar content, and a protein content. The length of cut may be an estimated length of cut which may be defined by a relative speed of the feeder rolls to a speed of the cutter drum and number of knives on the cutter drum. The controller 110 may use a predetermined kernel quality model or formula for converting multiple quality-related crop parameters into the kernel quality score. This model or formula may be crop-dependent and/or user-adjustable in order to allow the user to prioritise some crop attributes over others when desired.

The kernel quality threshold may be based on user input. For example, the controller 110 may receive the kernel quality threshold from the user interface 130. In some examples, the user may specify a crop type and/or a crop application (also referred to as a type of forage application). The controller 110 may determine the kernel quality threshold based on the crop type / application.

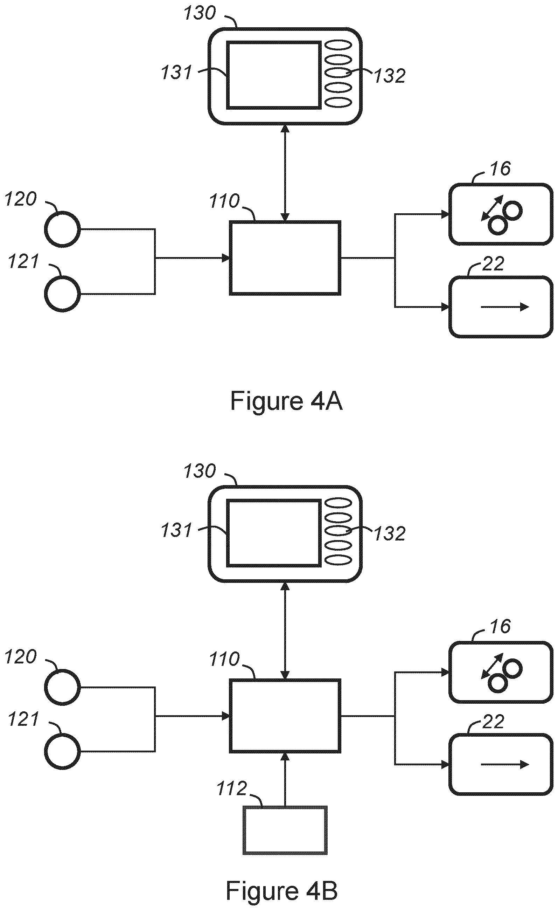

Figure 4A illustrates an example control schematic according to an embodiment of the present disclosure.

In this example, the controller 110 receives or determines the kernel quality threshold based on user input at the user interface 130. The kernel quality threshold may comprise a kernel quality threshold range with an upper kernel quality limit and a lower kernel quality limit.

The controller 110 receives the kernel quality score from the kernel quality sensor 120. In this example the controller 110 controls a plurality of operational parameters including: a separation between the crop processor rolls of the crop processor 16; and a driving speed 22. The controller 110 operates in a closed loop configuration with respect to controlling the plurality of operational parameters based on the kernel quality score measured by the kernel quality sensor 120. The controller 110 can adjust the plurality of operational parameters until the kernel quality score satisfies the kernel quality threshold.

In this example, the controller 110 may reduce one or more of: the separation between the crop processor rolls; and/or the driving speed, if the kernel quality score is less than the kernel quality threshold (e.g. less than the lower kernel quality limit). In some examples, the controller 110 may increase one or more of: the separation between the crop processor rolls; and/or the driving speed, if the kernel quality score is greater than the upper kernel quality limit. As discussed below, reducing the kernel quality score can improve the fuel efficiency and/or capacity of the crop processing. Therefore, in some examples, the controller 110 may adjust the operational parameters (e.g. increase the separation and/or increase the driving speed) to reduce the kernel quality score towards the lower quality limit and improve the fuel efficiency and/or capacity.

In this example, the forage harvester includes a moisture sensor 121 for measuring a crop moisture value. The crop moisture value can act as a proxy for crop maturity because the crop moisture will vary between an early stage of the growing season and a late stage of the growing season.

The controller 110 may respond to the crop moisture value in a number of ways. For example, the controller 110 may determine or refine the kernel quality score based on the crop moisture value (i.e. adjust the kernel quality score determined from the kernel quality sensor). As a second example, the controller 110 may determine or refine the kernel quality threshold based on the crop moisture value. In yet further examples, the controller 110 may refine the control of the plurality of operational parameters based on the crop moisture value. For example, if the crop moisture value indicates that the crop maturity is early-season, the controller 110 may increase the separation between the crop processor rollers 16.

Figure 4B illustrates a second example control schematic according to an embodiment of the present disclosure.

In this example, the controller 110 receives one or more objective conditions, including the kernel quality threshold, from the user interface 130. The one or more objective conditions may additionally include a target fuel consumption and/or a target capacity.

The controller 110 processes the one or more objective conditions with a feedforward model to determine a plurality of initial operational parameter values for the forage harvester. The controller 110 may retrieve or access the feedforward model stored in a memory 112 (local or remote, e.g. remote server or cloud). In some examples, the processing with the model may also be carried out remotely, e.g. to make use of higher computational processing power at a server or cloud.

The controller 110 may set the operational parameters of the forage harvester to the initial operational parameter values calculated using the feedforward model. In this way, when an operator commences a new harvesting operation or there is a sudden change in the harvesting operation (e.g. entering or starting to process a new field with differing conditions or requirements, or a different crop variety), the controller 110 can quickly adapt the operational parameters to meet the new conditions or requirements. In contrast, if the forage harvester solely relied on the closed feedback loop of the kernel quality sensor and kernel quality score, the adjustment to a new optimum set of control parameters may take a significant time resulting in a significant portion of the harvest being conducted with sub-optimal parameters. For example, there is typically a large delay between adjusting the separation between the crop processor rolls and observing the change in kernel quality score.

To allow for any errors in the estimates provided by the feedforward model, the controller 110 receives a kernel quality score from the kernel quality sensor 120 and refines or updates the operational parameters until the kernel quality score satisfies the kernel quality threshold. In this way, the feedforward model provides an estimate to define a coarse initial adjustment of the operational parameters and the closed loop measurement and control using the kernel quality score provide fine adjustment of the operational parameters to an optimum value for the current crop conditions. The controller 110 may also make use of a moisture value from a moisture sensor 121 in the same way as described in relation to Figure 4A. In some examples, the controller 110 may process the moisture value with the feedforward model or may refine the initial operational parameter values based on the moisture value (i.e. the feedforward model may account for the moisture value (as a crop condition parameter).

Exploring the feedforward model in more detail, the feedforward model may comprise a model that can estimate one or more objective parameters (kernel quality score, fuel consumption and/or capacity) that correspond to the one or more objective conditions, based on a plurality of operational parameters. The model may comprise a relational mapping between the operational parameters and the one or more objective parameters. The model may comprise a multi-dimensional regression model or a machine learning (ML) model such as a convolutional neural network (CNN). Either way, the model can map the relationship between the operational parameters and the one or more objective parameters. The model may be based on experimental data collected by one or more forage harvesters during previous harvesting operations.

The operational parameters may include one or more parameters relating to control of the forage harvester. The operational parameters may include one or more of: a separation of the crop processor rollers; a speed ratio of the crop processor rollers; a speed of the crop processor rollers; an engine speed; a driving speed; a cutter speed; an accelerator speed; and a cut length.

The model may also account for one or more input parameters. The one or more input parameters may include any parameter that is not an adjustable machine setting (operational parameter) but can influence the one or more objective parameters. The input parameters may include crop condition parameters, for example a crop type, a crop moisture value, a crop maturity value (e.g. number of kernels in an image from the kernel quality sensor), a crop colour value (from an image of the kernel quality sensor), , a length of cut, an ash content, a fibre content, a sugar content, a protein content, soil parameters (acidity, moisture, granularity etc), and a field location (e.g. GPS position to use modelling data from the same field). One or more crop condition parameters (e.g. the crop maturity value, crop colour value) may be measured by the kernel quality sensor. The input parameters may also include (substantially) fixed machine parameters including one or more of: a cutter drum type;
a crop processor roll surface type; a speed of the crop processor rolls; a speed ratio between the crop processor rolls; an engine speed, an accelerator speed or a cutter speed; a speed ratio between the engine speed and an accelerator speed; a speed ration between the engine speed and a cutter speed; and a speed ratio between the crop processor roll speed. It will be appreciated that some of the machine parameters may be an adjustable operational parameter or a fixed non-adjustable input parameter depending on the type / model of forage harvester. Irrespective of this, the model may only account for adjustment of a limited set of operational parameters based on the most sensitive operational parameters and/or the type and amount of experimental data used to define the model. For example, the model may only allow for adjustment of the separation of the rollers 16 and the driving speed as illustrated in Figure 4B, as these are two of the most sensitive operational parameters for kernel quality, fuel efficiency and capacity, and may therefore provide sufficient control of the three objective conditions. In such examples, all other operational parameters may be treated as fixed input parameters.

Therefore, the model may process the one or more objective conditions (and any input parameters) to determine a plurality of initial operational parameter values for satisfying the one or more objective conditions.

The feedforward model may calculate a value of an objective parameter, corresponding to an objective condition, for a particular set of starting values (guesses) of operational parameter values (and any fixed input parameters). In such examples, the controller 110 may run the model in an iterative fashion updating the operational parameter values until the one or more objective parameters satisfies the respective one or more objective conditions (or until a termination condition is satisfied e.g. maximum number of iterations, rate of change of objective parameter less than a threshold etc). In other words, the controller 110 may run the feedforward model as an optimisation routine. Known optimisation approaches may be used including simplex algorithms, combinatorial algorithms and the like.

In examples that implement a machine learning model, the model may directly calculate the plurality of initial operational parameter values directly from the one or more objective conditions and any input parameters. The controller 110 may input the one or more objective conditions to the model as corresponding target objective parameters and calculate the corresponding operational parameters. In other words, the ML model can operate in reverse based on CNN mappings between the operational parameters and the objective parameters. Therefore, no iteration may be needed.

Regardless of the type of model, the feedforward model comprises mappings between the operational parameters, any input parameters and the one or more objective parameters (kernel quality, fuel efficiency and/or capacity). These mappings can be defined based on experimental data. The experimental data can define training data to train a ML model or can be used to define parameter mappings for a multi-dimensional regression model. The training data may be grouped for particular locations or fields such that specific models can be generated for a specific field geographic location. In this way, the controller 110 can select a specific field model based on field data or geographical data received from the user or a location sensor.

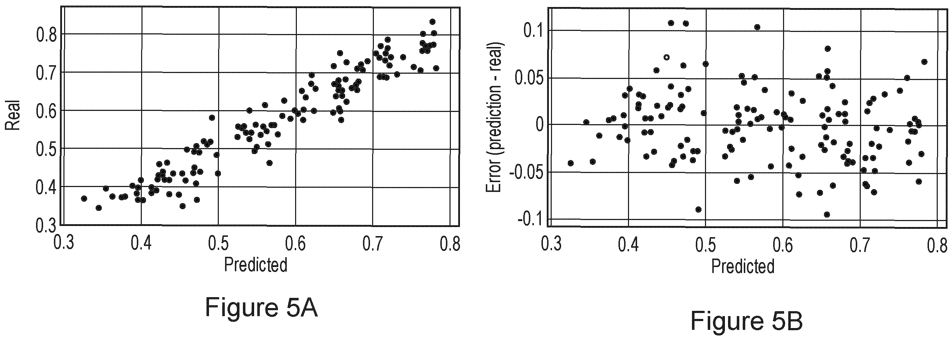

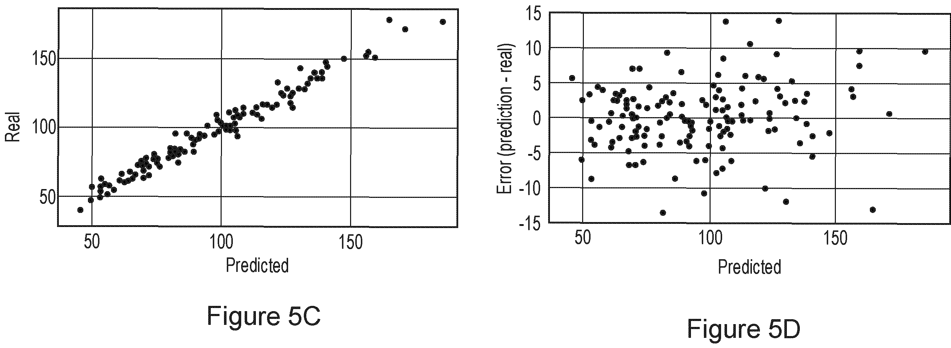

Figures 5A to 5D illustrate example results from an example multi-regression model. The multi-regression model was defined based on experimental harvesting data collected over multiple calendar years. The experimental data included measured operational parameters (engine speed; length of cut; capacity; cutterdrum speed; and kernel processing roll speed, speed ratio & gap) and input parameters (type of crop and moisture) alongside the resulting measured kernel quality score. The experimental data was used to fit the multi-regression model. In other examples, such experimental data may be used to train a ML model.

Figure 5A illustrates the performance of the multi-dimension regression model estimating the kernel quality score for different sets of operational parameters and input parameters. The model plots the estimated (predicted) kernel quality score against the real (measured) kernel quality score measured by a kernel quality sensor. Figure 5B illustrates the error between each estimated and predicted pair of values which is typically within a range of ± 0.1.

Figure 5C illustrates the performance of a multi-dimension regression model estimating the power consumption (a proxy for fuel consumption) for different sets of operational parameters and input parameters. The model plots the estimated (predicted) power consumption against the real (measured) power consumption. Figure 5B illustrates the error between each estimated and predicted pair of values which is typically within a range of ± 10 kW. The separation between the crop processor rolls was found to be the most sensitive parameter influencing power consumption.

The figures illustrate that a feedforward model can be used to accurately estimate an objective parameter based on a set of operational parameters and input parameters. As noted above, the controller 110 can run such a model in an iterative manner to determine a set of operational parameters to satisfy a particular objective condition. Furthermore, the feedforward model may include a sub-regression model for each objective parameter / condition of kernel quality, fuel consumption and capacity. In this way, the controller 110 can receive a plurality of objective conditions, define an objective function encompassing each objective condition (e.g. apply weights to each objective condition) and determine the set of initial operational parameter values by iterating the feedforward model until the objective function is satisfied.

In some examples, the controller 110 may receive a plurality of objective conditions including the kernel quality threshold and one or both of: a target fuel consumption; and a target capacity (of crop throughput/processing). The controller 110 may define the objective function to include a mandatory quality term to satisfy the kernel quality threshold. The objective function may include a desirable term that minimises an error between: the fuel consumption and the target fuel consumption; and/or the capacity and the target capacity. The controller 110 may then iteratively process the operational values to determine the initial operational parameter values that satisfy the mandatory quality term and minimise the error(s) in the desirable term(s). The iteration may continue until a termination condition is satisfied, for example: a maximum number of iterations have been completed; the error(s) are less than an error threshold; a gradient of the objective function is less than a gradient threshold; or any other known optimisation termination condition.

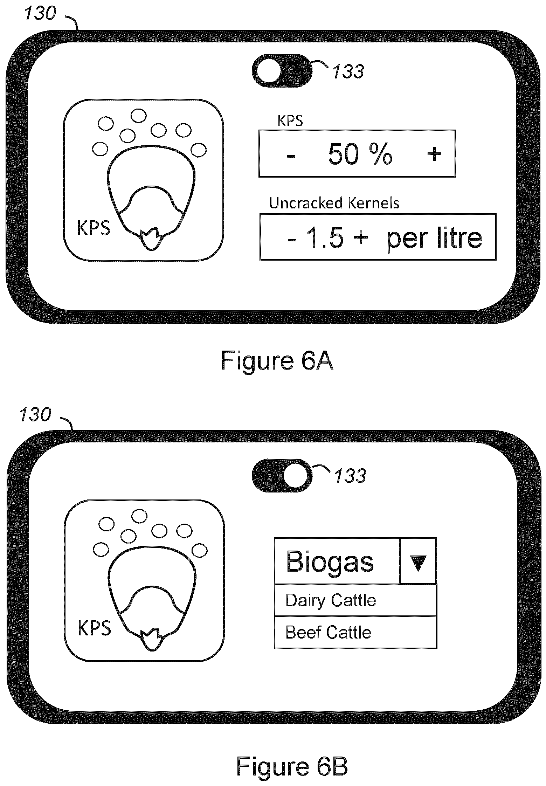

In some examples, the controller 110 may receive a fixed kernel quality threshold in combination with a fuel consumption weighting and a capacity weighting. The fuel consumption weighting and the capacity weighting may represent a user selected balance between high efficiency (low fuel consumption) and high capacity, which typically counteract. The controller 110 may determine the target fuel consumption and the target capacity based on the relative values of the fuel consumption weighting and the capacity weighting. In some examples, the controller 110 may receive a kernel quality weighting instead of a fixed kernel quality threshold. In such a case, the three weightings may express a preference towards one or more objective parameters. The controller 110 may determine the kernel quality threshold, the target fuel consumption and the target capacity based on the relative values of the kernel quality weighting, the fuel consumption weighting and the capacity weighting. Further detail on how the user interface can enable the user to select such weightings and kernel quality thresholds is provided below in relation to Figures 6A-6B, 7A-7B and 8.

As noted above, the controller 110 may set the operational parameters based on the calculated initial operational parameter values and then refine the operational parameters based on measurements from the kernel quality sensor until the kernel quality score satisfies the kernel quality threshold. In some examples, following the closed-loop adjustment, the controller 110 may update the feedforward model based on the refined operational parameters and the updated kernel quality score. In this way, the controller 110 can "personalise" the feedforward model to the current harvest operation.

Also following the closed loop refinement, the controller 110 may measure one or more of the crop condition parameters described above and update the feedforward model based on the crop condition parameters. Here updating the feedforward model may comprise calibrating the feedforward model to the current crop conditions. The controller 110 may compare estimated objective parameter values from the feedforward model with measured sensor values and update (fine tune) the feed forward model for the current crop conditions. The controller 110 may apply a Kalman filter to update the feedforward model.

The controller 110 may continue to capture sensor data measuring the operational parameters and the resulting objective parameters (kernel quality score, fuel consumption and capacity) and store the values (along with any input parameters) as training data. The training data may be used to further refine and improve the feedforward model. The controller 110 may communicate the training data to a remote server where a centralised feedforward model may be managed and updated.

In some examples, the feedforward model may fail to identify a plurality of operational parameters to satisfy the kernel quality threshold, or the one or more objective conditions more generally. For example, a maximum number of iterations may be exceeded and no combination of operational parameters may have been identified to achieve the kernel quality threshold. In such examples, the controller 110 may output one or more machine configuration recommendations to the user interface 130. For example, the controller 110 may recommend that one or more (substantially) fixed machine settings (which may be an input parameters) are altered. The one or more machine configuration recommendations may include: a recommendation to use a different type of cutter drum; a recommendation to use a different type of crop processor roll surface; or a recommendation to change any of the input parameters (e.g. speeds and speed ratios) which are not under automatic control.

Figures 6A and 6B illustrate example user interfaces 130 for setting the kernel quality threshold. Figure 6A illustrates a first toggle state of the user interface 130 and Figure 6B illustrates a second toggle state of the user interface 130. A user may toggle between the first toggle state and the second toggle state using a toggle button 133.

Figure 6A illustrates an example user interface enabling a user to specify a specific kernel quality threshold. In some examples, the user interface can enable a user to specify a kernel quality threshold as a target kernel quality score (which is a percentage of mass relating to small kernels (below a threshold size)). In some examples, the user interface 130 can enable a user to specify the kernel quality threshold as an (average) number of uncracked or large kernels per litre. Less than 2 whole kernels per litre may be desirable for some applications.

Figure 6B illustrates an example user interface enabling a user to select a type of forage application for the harvested crop. The controller 110 can set the kernel quality threshold to a preset value based on the selected type of forage application. In this example, the user interface enables the user to select between forage application types of dairy cattle feed, beef cattle feed and biogas. Each type may have a respective preset kernel quality threshold.

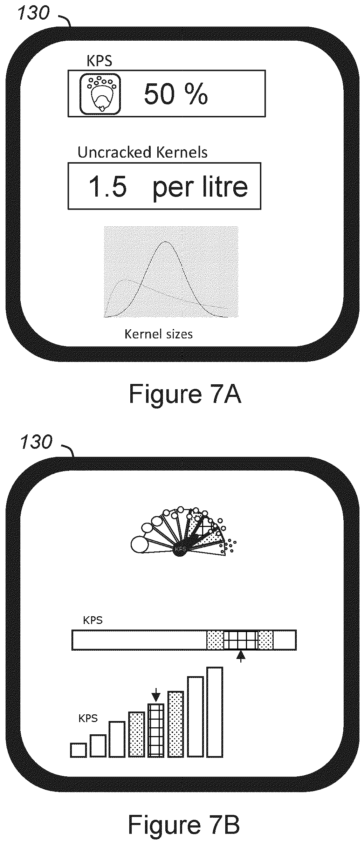

Figures 7A and 7B illustrate example user interfaces 130 for displaying the kernel quality score from the kernel quality sensor. Figures 7A and 7B each illustrate three different examples of how the user interface 130 can display the kernel quality score. It will be appreciated that a user interface may display one or more of the examples.

In a first example of Figure 7A, the user interface 130 displays the kernel quality score as a percentage value. In a second example, the user interface 130 displays the kernel quality score as a number of uncracked kernels or large kernels detected per litre. The user interface may display the first example or the second example quantitative kernel quality scores with colour coding depending on a difference between the kernel quality score and the kernel quality threshold. For example, the score may be green if the kerel quality score is within a threshold range of the kernel quality threshold, the kernel quality score may be yellow or amber if the kernel quality score is within a second threshold range of the kernel quality threshold and/or the score may be red if the kernel quality score is outside the second threshold range. The threshold range and/or the second threshold range may depend on the type of forage application and/or an uncertainty of the feedforward model in accurately estimating the plurality of operational parameters.

In the third example of Figure 7A, the user interface 130 displays the kernel quality score as a distribution. The camera of the kernel quality sensor can detect the size of the kernels passing the sensor and represent the size distribution as a histogram or as a fitted lognorm distribution. The display may dynamically update and aggregate image sizes from a plurality of sensor images.

The examples of Figure 7B do not include any quantitative values. Instead, the examples include quantitative indicators that use a dial, range or bar steps to indicate the kernel processing score. An arrow or dial may point to the measured kernel quality score. Similar to the first and second examples of Figure 7A, colour coding may be included to indicate the first and/or second threshold ranges. These threshold ranges may be based on the forage type application and/or the model uncertainty. In this example, the colour coding is indicated by dotted regions and hatched regions. The examples provide a measurement indicator without displaying the exact value of the kernel quality score. Displaying the exact value can cause operators to distrust the sensor when the kernel processing score does not match the kernel quality threshold and/or a sample measurement of the crop silage (e.g. from a lab). By not including the exact value, the operator will have greater confidence in the sensor and that the kernel quality score matches the kernel quality threshold (within error), and refrain from manually adjusting the operational settings. However, if the kernel quality score falls outside the second threshold range, the operator may manually adjust one or more operational parameters in an attempt to rectify the error.

The examples of Figures 7A and 7B also enable a user to monitor the change in kernel quality score during the closed loop refinement of the initial operational parameter values. The user interface may include a message during an initial period to indicate that the estimated initial operational parameter values are being automatically updated using closed loop control.

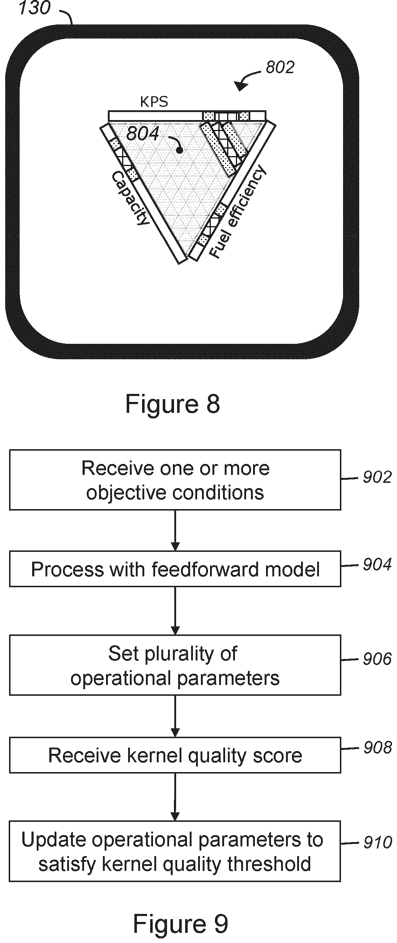

Figure 8 illustrates an example user interface 130 for setting a plurality of objective parameters according to an embodiment of the present disclosure.

The user interface 130 displays an objective condition balancing interface 802. The objective condition balancing interface provides an intuitive interface for the user to balance competing objective conditions and select a weighted combination of objective conditions based on a visual graphic.

In this example, the objective condition balancing interface 802 comprises a triangle with a side representing each of the objective conditions /parameters of: kernel quality (KPS), fuel consumption and capacity. Each side is effectively an axis for the respective objective condition. The user can move a selection point within the triangle to visually select their preferred balance between kernel quality score, fuel consumption and capacity. The controller 110 may convert a selection point selected by a user into a kernel quality threshold, a target fuel consumption and a target capacity.

In some examples, the controller 110 may perform an intermediate step of determining weightings for each objective condition prior to determining the three objective conditions.

The controller 110 may process the three objective conditions with the feedforward model to determine the plurality of initial operational parameter values as described above.

In examples not including a feedforward model, the controller 110 may control the operational parameters to satisfy the three objective conditions.

In a similar way to that described for Figures 7A and 7B, the objective condition balancing interface 802 may include colour coding. Each side of the triangle (i.e. each axis) representing the objective condition may be colour coded. Similarly the area within the triangle may be colour coded. In this example, the colour coding is indicated by dotted regions and hatched regions.

The meaning of the colour coding may differ depending on whether the operator is setting the selection point (objective conditions) or operating the forage harvester.

When setting the selection point 804, the colours may indicate the expected values of the corresponding objective parameters with an associated threshold range indicating an uncertainty of the model.

When harvesting, the colours may indicate the measured values of the objective parameters with respect to the respective objective conditions with an associated threshold range and second threshold range depending on the kernel quality sensor accuracy and/or model uncertainty.

Figure 9 illustrates an example method for controlling a forage harvester according to an embodiment of the present disclosure. The method may be performed by the controller 110.

A first step 902 comprises receiving one or more objective conditions including a kernel quality threshold for the crop silage.

A second step 904 comprises processing the one or more objective conditions with a feedforward model to determine a plurality of initial operational parameter values for the forage harvester.

A third step 906 comprises setting a plurality of operational parameters of the forage harvester using the initial operational parameter values.

A fourth step 902 comprises receiving a kernel quality score from the kernel quality sensor.

A fifth step 910 comprises updating the plurality of operational parameters until the kernel quality score satisfies the kernel quality threshold.

Throughout the present specification, the descriptors relating to relative orientation and position, such as "horizontal", "vertical", "top", "bottom" and "side", are used in the sense of the orientation of the forage harvester as presented in the drawings. However, such descriptors are not intended to be in any way limiting to an intended use of the described or claimed invention.

It will be appreciated that any reference to "close to", "before", "shortly before", "after" "shortly after", "higher than", or "lower than", etc, can refer to the parameter in question being less than or greater than a threshold value, or between two threshold values, depending upon the context.

## Claims

1. A forage harvester for harvesting crop, the forage harvester comprising:
a crop processor for processing the crop to form crop silage;
a kernel quality sensor for monitoring the crop silage; and
a controller configured to:
receive one or more objective conditions including a kernel quality threshold for the crop silage;
process the one or more objective conditions with a feedforward model to determine a plurality of initial operational parameter values for the forage harvester;
set a plurality of operational parameters of the forage harvester using the initial operational parameter values;
receive a kernel quality score from the kernel quality sensor; and
update the plurality of operational parameters until the kernel quality score satisfies the kernel quality threshold.

2. The forage harvester of claim 1, wherein the controller is configured to:
receive a crop moisture value from a moisture sensor; and
adjust one or more of: the kernel quality score, the kernel quality threshold or the plurality of operational parameters based on the crop moisture value.

3. The forage harvester of claim 1 or claim 2, wherein the plurality of operational parameters include:
engine speed;
a separation of the crop processor rollers;
a speed ratio of the crop processor rollers;
a driving speed; and
a cut length.

4. The forage harvester of any preceding claim, wherein the controller is configured to update the feedforward model based on the kernel quality score and the adjusted operational parameters.

5. The forage harvester of any preceding claim, wherein the controller is configured to:
process the one or more objective conditions and one or more input parameters with the feedforward model to determine the plurality of initial operational parameter values, wherein the one or more input parameters comprise one or more of:
a crop condition parameter;
a cutter drum type;
a number of knives;
a crop processor roll surface type;
a speed of the crop processor rolls;
a speed ratio between the crop processor rolls;
an engine speed, an accelerator speed or a cutter speed;
a speed ratio between an engine speed and an accelerator speed;
a speed ratio between an engine speed and a cutter speed; and
a speed ratio between an engine speed and a speed of the crop processor rolls.

6. The forage harvester of any preceding claim, wherein the controller is configured to:
output one or more machine configuration recommendations if the feedforward model does not identify a plurality of operational parameters to satisfy the one or more objective conditions, wherein the one or more machine configuration recommendations comprise:
a recommendation to use a different type of cutter drum;
a recommendation to use a different type of crop processor roll surface; or
a recommendation to change any of the input parameters that cannot be automatically set by the controller.

7. The forage harvester of any preceding claim, wherein the feedforward model comprises a multi-dimensional model, a multi-dimensional regression model or a machine learning model.

8. The forage harvester of any preceding claim, wherein the feedforward model comprises a relation mapping between a plurality of independent variables, including the plurality of operational parameters, and one or more objective parameters corresponding to the one or more objective conditions.

9. The forage harvester of any preceding claim, wherein the one or more objective conditions include one or more of:
a target fuel consumption; and
a target capacity.

10. The forage harvester of claim 9, wherein the controller is configured to determine the plurality of initial operational parameter values to satisfy the one or more objective conditions.

11. The forage harvester of claim 9 or claim 10, wherein the controller is configured to:
determine an objective function based on the one or more objective conditions; and
update operational parameter values until a value of the objective function satisfies a termination condition to obtain the plurality of initial operational parameter values.

12. The forage harvester of claim 11, wherein the controller is configured to define the objective function as comprising:
a mandatory quality objective corresponding to an estimated kernel quality score exceeding the kernel quality threshold; and
one or both of:
a desirable fuel consumption objective corresponding to minimising an error between an estimated fuel consumption and the target fuel consumption; and
a desirable capacity objective corresponding to minimising an error between an estimated capacity and the target capacity.

13. The forage harvester of claim 12, wherein the forage harvester comprises a user interface configured to display an objective condition balancing interface and the controller is configured to:
receive a user selection from the objective condition balancing interface;
determine the kernel quality threshold based on the user selection; and
determine one or both of: the target fuel consumption; and the target capacity, based on the user selection.

14. A method for controlling a forage harvester comprising:
receiving one or more objective conditions including a kernel quality threshold for the crop silage;
processing the one or more objective conditions with a feedforward model to determine a plurality of initial operational parameter values for the forage harvester;
setting a plurality of operational parameters of the forage harvester using the initial operational parameter values;
receiving a kernel quality score from the kernel quality sensor; and
updating the plurality of operational parameters until the kernel quality score satisfies the kernel quality threshold.

15. The method of claim 14, wherein processing the feedforward model comprises a machine learning model.
